# EUROPEAN PATENT APPLICATION

(11) **EP 3 035 481 A1**
(43) Date of publication of application: **22.06.2016**
(21) Application number: 14198574.7
(22) Date of filing: 17.12.2014
(51) Int. Cl.: H02J 3/40, H02J 3/38

(54) **Turbine device for converting hydrokinetic power into electrical power, system for converting hydrokinetic power into electrical power for an electrical power grid, and method for feeding electrical power into an electrical power grid**

(71) Applicant: Siemens Aktiengesellschaft, 80333 München (DE)
(72) Inventor: Dornauer, Marco, 90562 Heroldsberg (DE)

(57) **Abstract**

A turbine device (8) for converting hydrokinetic power into electrical power is provided. The turbine device (8) comprises a hydrokinetic turbine (10) being configured to produce a torque, a generator (11) being configured to convert the torque into a first electrical signal having a first frequency, and a frequency converter (12) being configured to convert the first electrical signal into a second electrical signal having a second frequency.

By integrating both the generator and the frequency converter into the turbine device, the coupling of a plurality of turbine devices with one another is facilitated, and the amount of wiring required for the electrical connection to onshore devices is reduced.

Further, a system (1) for converting hydrokinetic power into electrical power for an electrical power grid (2) and a method for feeding electrical power into an electrical power grid (2) are provided.

## Description

The present invention relates to a turbine device that is configured to convert hydrokinetic power into electrical power, a system for converting hydrokinetic power into electrical power suitable for being fed into an electrical grid, and a method for feeding electrical power into an electrical power grid.

Hydrokinetic power is an environment-friendly, renewable energy source. Usually, a hydrokinetic turbine is used to convert the hydrokinetic power into a mechanical power. A generator converts the mechanical power into an electrical power and outputs an electrical signal having a frequency and an amplitude.

Before being fed into an electrical power grid, the electrical signal needs to be adapted accordingly. For example, a frequency converter adapts the frequency, and a transformer adapts the amplitude of the electrical signal according to the requirements of the electrical power grid. Furthermore, a control device including a switching device can be connected so as to control the feeding of an adapted electrical signal into the electrical power grid.

Conventionally, the hydrokinetic turbine comprises at least a rotor and a generator that operate under water. The frequency converter, transformer and control device are usually located onshore. Underwater wiring is used for coupling the electrical power from underwater into onshore devices.

Each hydrokinetic turbine generates an individual, time-dependent torque depending on the local current flow. Thus, an underwater entity comprising a hydrokinetic turbine having at least a rotor and a generator produces an individual, time-dependent electrical signal. Therefore, each underwater entity needs to be separately connected to onshore devices using an underwater wiring. This configuration requires a large amount of wiring and thereby causes a high expense.

It is one object of the present invention to reduce the amount of wiring required for connecting a plurality of hydrokinetic turbines with an electrical power grid.

According to a first aspect, a turbine device for converting hydrokinetic power into electrical power is suggested. The turbine device comprises, in particular integrates, a hydrokinetic turbine having at least a rotor and a generator and a frequency converter. The hydrokinetic turbine is configured to produce a torque. The generator is configured to convert the torque into a first electrical signal having a first frequency. The frequency converter is configured to convert the first electrical signal into a second electrical signal having a second frequency.

In particular, the hydrokinetic turbine, generator and the frequency converter are integrated into the underwater turbine device and located next to one another. Particularly, the frequency converter can be connected directly to the generator, thereby reducing the amount of wiring for connecting the generator with the frequency converter.

The suggested turbine device operates under water and produces electrical power in form of the second electrical signal. The second frequency can be adapted by configuring the frequency converter accordingly. For example, the second frequency from one turbine device may be synchronized with that from another turbine device.

Hydrokinetic power relates to any kind of energy source applying a kinetic energy originating from water pressure and water flow. In particular, hydrokinetic power is present in water currents, in particular in an ocean current, in a tidal current, in a current of a river and/or at an outlet of a water power plant. A hydrokinetic turbine relates to a turbine having a rotor that produces a torque when being flowed through by a water current.

The term wiring relates to any kind of electrical connection that is suitable for transporting charge carriers and therefore for connecting, linking and/or coupling electrical power to electrical devices. A wiring can include one or more wires, cables, lines, mains, leads and/or cords.

A generator relates to an electrical device that converts mechanical energy to electrical energy for use in an external circuit, in particular in an electrical power grid. The generator can include a dynamo, an alternator, a rotor, a stator, an armature and/or a field, or a combination thereof.

A frequency converter relates to an electrical device that converts a first electrical signal to a second electrical signal, wherein the first electrical signal has a first frequency and a first amplitude, and the second electrical signal has a second frequency and a second amplitude. The electrical signal may be a voltage signal. The first electrical signal and/or the second electrical signal can be a direct current (DC) signal, i.e. the first and/or the second frequency can also be zero. A frequency converter can include a DC to DC converter, an electrical and/or linear regulator, a rectifier, a power supply unit, a switched mode power supply, and/or an inverter, or a combination thereof.

According to an embodiment, the frequency converter is attached and/or directly coupled to the generator.

The frequency converter can be in an immediate contact with the generator in the physical and/or electrical sense. An immediate physical contact means that the frequency converter and the generator are positioned adjacent to each other. An immediate electrical contact involves an electrical connection between the frequency converter and the generator with no other electrical elements in between. This configuration reduces the requirements for space and connecting means.

According to a further embodiment, the generator is a speed-variable generator.

The torque is transferred from the rotor of the hydrokinetic turbine to the generator, e.g., via a shaft that rotates with a variable speed in function of the torque. The speed-variable generator is capable of generating electrical power from a wide range of rotational speed and thus operable at locations where the water current varies with time. The speed-variable generator can include a gear that adapts the rotational speed from the hydrokinetic turbine to the requirements of the generator.

According to a further embodiment, the turbine device comprises a housing that encloses the rotor, the generator and the frequency converter.

Inside the common housing, the rotor, the generator and the frequency converter can be located close to one another. The housing can be completely under water, or a part of the housing can protrude from the water surface.

According to a further embodiment, the frequency converter is configured to operate under water.

Thus, the frequency converter can be positioned offshore near the hydrokinetic turbine and therefore the generator, reducing the required amount of wiring.

According to a further embodiment, the frequency converter includes at least one rectifier being configured to convert the first electrical signal having the first frequency into an intermediate direct current signal, and at least one inverter being configured to convert the intermediate direct current signal to the second electrical signal having the second frequency.

The first electrical signal may fluctuate depending on the water current. An entity of a rectifier and an inverter is suitable for providing the second electrical signal with the required second frequency.

According to a further embodiment, the second frequency corresponds to a mains frequency of an electrical power grid.

By configuring the frequency converter accordingly, the second frequency can be matched with the mains frequency. In this way, the second electrical signal from the turbine device is suitable for being fed into the electrical power grid.

According to a further embodiment, the turbine device further comprises a transformer that converts the second electrical signal having the second frequency into a third electrical signal having the second frequency and a mains amplitude.

With the amplitude adapted to the requirements from the mains, feeding of the produced electrical signal into the electrical power grid is further facilitated.

Any embodiments of the first aspect may be combined with any embodiment of the first aspect to obtain another embodiment of the first aspect.

According to a second aspect, a system for converting hydrokinetic power into electrical power for an electrical power grid is suggested. The system comprises a plurality of aforementioned turbine devices of the first aspect or an embodiment of the first aspect, an onshore control device, at least one main wiring and a plurality of subwirings. The onshore control device includes a switching device that is configured to couple the turbine devices into the electrical power grid. The at least one main wiring is connected to the onshore control device. Each of the plurality of subwirings is configured to couple a second electrical signal from one of the plurality of turbine devices into one of the at least one main wiring.

The plurality of the aforementioned turbine devices can be put into operation for collectively generating electrical power, e.g. in a sea and/or a river. Each turbine device generates electrical power in form of the second electrical signal having the second frequency. Each of the frequency converters can be configured so as to provide a second electrical signal being compatible with the second electrical signal from another turbine device. Here, two second electrical signals being compatible with each other means that both second electrical signals can be accumulated in a wiring.

Therefore, it is not necessary to separately connect each turbine device to the onshore control device that is operable to feed the second electrical signals from the turbine devices into the electrical power grid. Instead, the main wiring can accumulate the output electrical signals from the plurality of the turbine devices and transfer an accumulated electrical signal to the onshore control device.

The main wiring has an onshore end that is connected to the onshore control device and runs from the onshore control device under water, where at least one turbine device can be connected to it, for example by means of a subwiring. The main wiring includes a wiring for accumulating, transferring and/or delivering the second signals from the plurality of turbine devices, e.g. to the onshore control device.

Each subwiring connects at least one of the plurality of the turbine devices to the main wiring. In particular, the subwiring includes a wiring for transferring and/or delivering the second signals from a turbine device to a main wiring. Furthermore, at least a part of the subwiring can be located under water, e.g. in a sea or a river.

In so doing, the amount of wiring required for connecting each of the plurality of turbine devices to the onshore control device can be reduced. The saved amount of wiring becomes greater as the distance of the turbine devices from the onshore control device increases.

According to a further embodiment, the onshore control device includes a transformer that converts the second electrical signal having the second frequency and a mains amplitude.

The turbine devices generate the second electrical signal having the mains amplitude according to the electrical power grid. Therefore, the power loss by coupling the second electrical signal and/or an accumulated electrical signal into the electrical power grid can be reduced.

According to a further embodiment, the system comprises two main wirings being connected with each other so as to form a ring.

The ring of the two main wirings provides each turbine device with two contacts to the onshore control device. The ring can be formed, e.g. by connecting two main wirings with each other.

The ring structure secures the delivery of the accumulated electrical signal to the onshore control device in case that a break occurs in one of the main wirings.

According to a further embodiment, the system comprises at least two main wirings that are separate from each other. Each of the plurality of turbine devices is connected to one of the at least two main wirings.

Each of the plurality of turbine devices is connected to one of the at least two main wirings thus that, in total, all turbine devices are connected to the onshore control device. Accordingly, a malfunctioning main wiring, e.g. due to a break of the electrical connection, does not perturb the operation of the other main wirings.

According to a further embodiment, the second electrical signals from the plurality of turbine devices have a common second frequency.

In particular, the common second frequency can be matched with a mains frequency according to the electrical power grid, thereby reducing a power loss by coupling the second frequency into the electrical power grid.

Any embodiment of the second aspect may be combined with any embodiment of the second aspect to obtain another embodiment of the second aspect.

According to a third aspect, a method for feeding electrical power into an electrical power grid is suggested. The method comprises providing a plurality of the aforementioned turbine devices of the first aspect or an embodiment of the first aspect, connecting the output terminals of at least a subset of the plurality of the turbine devices with one another for accumulating the second electrical signals to an accumulated electrical signal having the second frequency, and feeding the accumulated electrical signal into the electrical power grid.

Each of the plurality of turbine devices is provided with an output terminal that is suitable for being connected with a wiring and transferring the produced electrical power.

Each frequency converter of the plurality of turbine devices can be configured such that all second electrical signals have the same second frequency. In particular, the second frequency matches the mains frequency of the electrical power grid.

At least two output terminals of the plurality of turbine devices are connected with each other via a wiring. Having the same second frequency, the second electrical signals from different turbine devices can be merged in a main wiring and accumulated. The accumulated electrical signal can be coupled into an onshore control device and/or into an electrical power grid.

The embodiments and features described with reference to the apparatus of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic view of a first embodiment of a system for converting hydrokinetic power into electrical power for an electrical power grid;
Fig. 2 shows a schematic view of a turbine device;
Fig. 3 shows a schematic view of a second embodiment of a system for converting hydrokinetic power into electrical power for an electrical power grid; and
Fig. 4 shows a schematic view of a third embodiment of a system for converting hydrokinetic power into electrical power for an electrical power grid.

In the Figures, like reference numerals designate like or functionally equivalent elements, unless otherwise indicated.

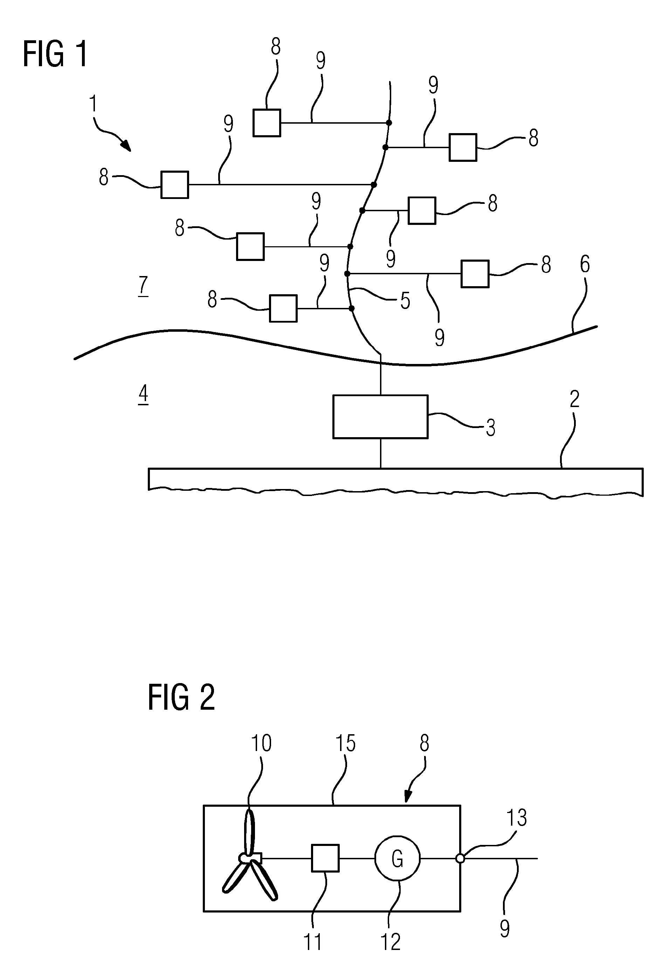

Fig. 1 shows a system 1 for converting hydrokinetic power into electrical power for an electrical power grid 2. An onshore control device 3 is connected to the power grid 2. Both the onshore control device 3 and the electrical power grid 2 are located onshore 4. A main wiring 5 runs from the onshore control device 3 under water 7. A plurality of turbine devices 8 are located under water 7. A subwiring 9 connects each of the plurality of turbine devices 8 with the main wiring 5.

The plurality of turbine devices 8 convert hydrokinetic power from under water 7 into an electrical power in form of a second electrical signal having a second frequency. The subwirings 9 couple the second electrical signals from the plurality of turbine devices 8 into the main wiring 5. The main wiring 5 accumulates the second electrical signals and transfers an accumulated electrical signal to the onshore control device 3. For this purpose, the phases of the second electrical signals may be adapted accordingly.

The onshore control device 3 can comprise a transformer and/or a switching device and controls the coupling of the accumulated electrical signal into the electrical power grid 2.

Fig. 2 shows the structure of a turbine device 8 in a schematic view. A hydrokinetic turbine 10 is configured to convert the hydrokinetic power of a water current into a torque. The torque is transferred to a generator 11 which converts the mechanical power resulting from the received torque into an electrical power in form of a second electrical signal having a second frequency.

The second frequency fluctuates as a function of the hydrokinetic power from the water current that varies depending on time and the location of the turbine device 8. The frequency converter 12 is connected to the generator 11 and converts a first electrical signal from the generator 11 having a first frequency to a second electrical signal having a second frequency. The second frequency can be set by configuring the frequency converter 12 accordingly. Preferably, the mains frequency is set as the second frequency in order to reduce the power loss by coupling the second electrical signal into the electrical power grid 2.

The frequency converter 12 is attached and/or directly coupled to the generator 11, in both physical and electrical senses. The frequency converter 12 and the generator 11 are installed, together with the hydrokinetic turbine 10, in a common housing 15 that is located under water 7. Alternatively, at least one of the hydrokinetic turbine 10, the generator 11, and the frequency converter 12 may be not contained in the common housing 15 but configured to operate under water 7.

A subwiring 9 is connected with the turbine device 8 at an output terminal 13. The subwiring 9 transfers the second electrical signal from the frequency converter 12 of the turbine device 8 to the main wiring 5.

In another embodiment, a transformer (not shown) is installed between the frequency converter 12 and the output terminal 13 of the turbine device 8 to change an amplitude of the second electrical according to that required by the electrical power grid 2.

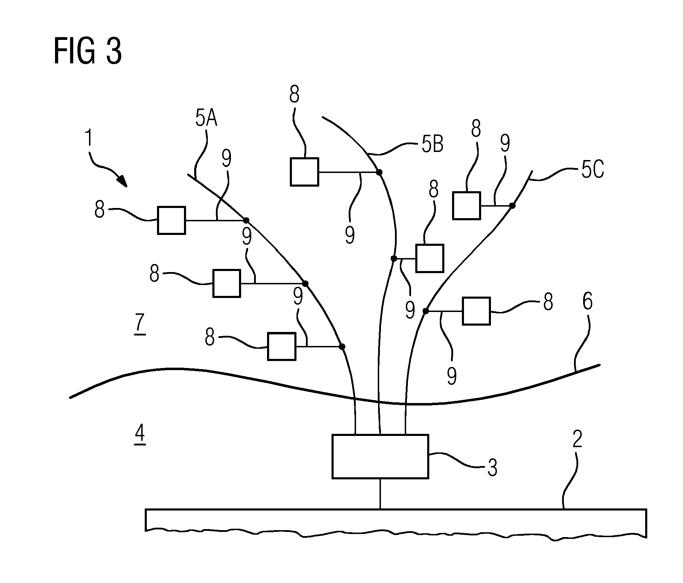

Fig. 3 shows a schematic view of a second embodiment of a system for converting hydrokinetic power into electrical power for an electrical power grid. A plurality of main wirings 5A, 5B, 5C run from the onshore control device 3 into the water 7. Each of the plurality of turbine devices 8 is connected to one of the main wirings 5A, 5B, 5C via a subwiring 9. In this embodiment, malfunction of one of the main wirings 5A, 5B, 5C does not lead to a collapse of the whole system.

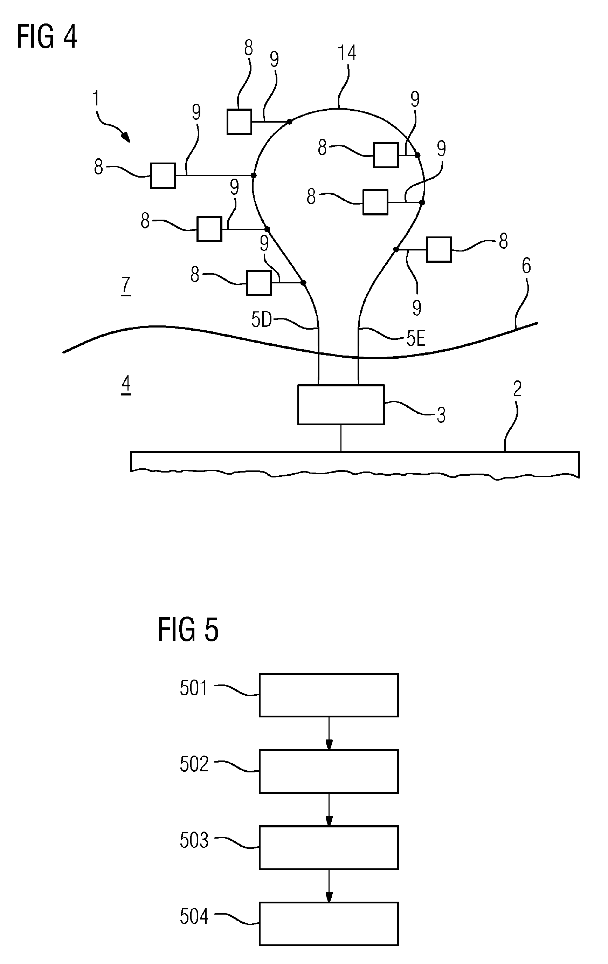

Fig. 4 shows a schematic view of a third embodiment of a system for converting hydrokinetic power into electrical power for an electrical power grid. Here, two main wirings 5D, 5E are connected with each other and form a ring 14. All turbine devices 8 are connected to the ring 14 that has two contacts with the onshore control device 3. If the electrical connection breaks at a position in the ring 14, the accumulated electrical signal can be redirected towards the operational contact.

Fig. 5 illustrates a method for feeding electrical power into an electrical power grid.

In a first step 101, a plurality of the aforementioned turbine devices of the first aspect or an embodiment of the first aspect is provided.

In a second step 102, each of the plurality of turbine devices is provided with an output terminal being configured to output the second electrical signal having the second frequency.

In a third step 103, the output terminals of at least a subset of the plurality of the turbine devices are connected with one another for accumulating the second electrical signals to an accumulated electrical signal having the second frequency.

In a fourth step 104, the accumulated electrical signal is fed into the electrical power grid.

Although the present invention has been described in accordance with preferred embodiments, it is obvious for the person skilled in the art that modifications are possible in all embodiments.

## Claims

1. A turbine device (8) for converting hydrokinetic power into electrical power, the turbine device (8) comprising:
a hydrokinetic turbine (10) being configured to produce a torque,
a generator (11) being configured to convert the torque into a first electrical signal having a first frequency, and
a frequency converter (12) being configured to convert the first electrical signal into a second electrical signal having a second frequency.

2. The turbine device according to claim 1,
wherein the frequency converter (12) is attached to the generator (11).

3. The turbine device according to claim 1 or 2,
wherein the frequency converter (12) is directly coupled to the generator (11).

4. The turbine device according to one of claims 1 - 3, wherein the generator (11) is a variable-speed generator.

5. The turbine device according to one of claims 1 - 4, further comprising a housing (15) that encloses the hydrokinetic turbine (10), the generator (11) and the frequency converter (12).

6. The turbine device according to one of claims 1 - 5, wherein the frequency converter (12) is configured to operate under water (7).

7. The turbine device according to one of claims 1 - 6, wherein the frequency converter (12) includes at least one rectifier being configured to convert the first electrical signal having the first frequency into an intermediate direct current signal, and at least one inverter being configured to convert the intermediate direct current signal into the second electrical signal having the second frequency.

8. The turbine device according to one of claims 1 - 7, wherein the second frequency corresponds to a mains frequency of an electrical power grid (2).

9. The turbine device according to one of claims 1 - 8, further comprising a transformer that converts the second electrical signal having the second frequency into a third electrical signal having the second frequency and a mains amplitude.

10. A system (1) for converting hydrokinetic power into electrical power for an electrical power grid (2), the system (1) comprising:
a plurality of turbine devices (8) according to one of claims 1 - 9,
an onshore control device (3) including a switching device being configured to couple the turbine devices (8) into the electrical power grid (2),
at least one main wiring (5) being connected to the onshore control device (3), and
a plurality of subwirings (9), each of the plurality of subwirings being configured to couple a second electrical signal from one of the plurality of turbine devices (8) into the at least one main wiring (5).

11. The system according to claim 10,
wherein the onshore control device (3) includes a transformer that converts the second electrical signal having the second frequency into a third signal having the second frequency and a mains amplitude.

12. The system according to claim 10 or 11,
comprising two main wirings (5D, 5E) being connected with each other so as to form a ring (14).

13. The system according to claim 10 or 11,
comprising at least two main wirings (5A, 5B, 5C) that are separate from each other, wherein each of the plurality of turbine devices (8) is connected to one of the at least two main wirings (5A, 5B, 5C).

14. The system according to one of claims 10 - 13,
wherein the second electrical signals from the plurality of turbine devices (8) have a common second frequency.

15. A method for feeding electrical power into an electrical power grid (2), the method comprising:
providing (501) a plurality of turbine devices (8) according to one of claims 1 - 9,
providing (502) each of the plurality of the turbine devices (8) with an output terminal (13) being configured to output the second electrical signal having the second frequency,
connecting (503) the output terminals (13) of at least a subset of the plurality of the turbine devices (8) with one another for accumulating the second electrical signals to an accumulated electrical signal having the second frequency, and
feeding (504) the accumulated electrical signal into the electrical power grid (2).
